# EUROPÄISCHE PATENTSCHRIFT

(11) **EP 1 234 363 B1**
(45) Veröffentlichungstag und Bekanntmachung des Hinweises auf die Patenterteilung: **17.12.2003**
(21) Anmeldenummer: 00989865.1
(22) Anmeldetag: 18.11.2000
(51) Int. Cl.: H02G 3/00

(54) **VORRICHTUNG ZUR BEFESTIGUNG EINES FLACHBANDKABELS**
DEVICE FOR ATTACHING A RIBBON CABLE
DISPOSITIF POUR FIXER UN CABLE PLAT

(30) Priorität: 02.12.1999 DE 19958212
(43) Veröffentlichungstag der Anmeldung: 28.08.2002
(73) Patentinhaber: A. Raymond & Cie, 38028 Grenoble (FR)
(72) Erfinder: HAPPLE, Wolfgang, 79618 Rheinfelden (DE)
(74) Vertreter: Kirchgaesser, Johannes, Dipl.-Ing.
(86) Internationale Anmeldenummer: EP0011494
(87) Internationale Veröffentlichungsnummer: WO01041275

(56) Entgegenhaltungen:
- US-A- 4 406 916
- PATENT ABSTRACTS OF JAPAN vol. 017, no. 289 (E-1375), 3. Juni 1993 (1993-06-03) & JP 05 020929 A (FUJITSU LTD), 29. Januar 1993 (1993-01-29)
- PATENT ABSTRACTS OF JAPAN vol. 1996, no. 10, 31. Oktober 1996 (1996-10-31) & JP 08 149662 A (YAZAKI CORP), 7. Juni 1996 (1996-06-07)
- PATENT ABSTRACTS OF JAPAN vol. 1995, no. 04, 31. Mai 1995 (1995-05-31) & JP 07 031043 A (YAZAKI CORP), 31. Januar 1995 (1995-01-31)
- PATENT ABSTRACTS OF JAPAN vol. 1995, no. 11, 26. Dezember 1995 (1995-12-26) & JP 07 211150 A (YAZAKI CORP), 11. August 1995 (1995-08-11)

## Beschreibung

Die Erfindung bezieht sich auf eine Vorrichtung zur Befestigung eines Flachbandkabels an einer Trägerplatte mit Mitteln zur Halterung des Flachbandkabels nach dem Oberbegriff von Anspruch 1.

Bei Flachbandkabeln sind eine Anzahl von Leiterbahnen mit ihren Anschlüssen in einer Ebene nebeneinander auf einer dünnen, elektrisch isolierenden Trägerschicht aufgebracht. Sie sollen sehr platzsparend an Trägerplatten, z.B. an Karosserieteilen von Kraftfahrzeugen, bestimmten, zuvor festgelegten Bahnen folgend, verlegt werden. Dabei ist es erforderlich, sie in Abständen an der Trägerplatte zu befestigen.

Durch die JP 05 020 929 A ist eine Vorrichtung zur Befestigung eines Flachbandkabels an einer Trägerplatte mit Mitteln zur Halterung des Flachbandkabels bekannt, bei der die Vorrichtung als ein einstückiges, flaches Kunststoffteil ausgebildet ist, an dem, ausgehend von einem Mittelfeld in Form eines gleichseitigen Vierecks und paarweise einander gegenüberliegend, sich vier Fortsätze erstrecken, die geringfügig breiter sind als ein zu befestigendes Flachbandkabel an seiner für die Befestigung vorgesehenen Seite, wobei die Vorrichtung entlang einer diagonal durch das Mittelfeld verlaufenden Grundkante derart faltbar ist, dass jeweils zwei benachbarte Fortsätze zur Deckung gelangen, worauf sie in dieser Stellung arretierbar sind.

Aufgabe der Erfindung ist es, eine Vorrichtung zur Befestigung von Flachbandkabeln an einer Trägerplatte zu schaffen, die keine verlierbaren Teile aufweist, einfach zu handhaben ist, bei der Montage die Anpassung an die vorgegebenen Abstände der in der Trägerplatte für die Befestigung vorgesehenen Öffnungen ermöglicht und insbesondere auch das Verlegen von Flachbandkabeln entlang winkliger Bahnen in einfacher und dabei präziser und das Flachbandkabel schonender Weise erlaubt

Dies wird erfindungsgemäß dadurch erreicht, dass die Vorrichtung als ein kreuzförmiges Kunststoffteil ausgebildet ist, dass sie Mittel zu ihrer Befestigung an einer Trägerplatte aufweist, und dass am Mittelfeld und/oder wenigstens an einem der Fortsätze Mittel zur Halterung eines sich über diesen Fortsatz, das Mittelfeld und den gegenüberliegenden Fortsatz erstreckend eingelegten Flachbandkabels vorgesehen sind.

Wenn ein Flachbandkabel in dieser Weise in die Vorrichtung eingelegt wird und anschließend die Vorrichtung entlang der Grundkante im Mittelfeld gefaltet wird, wird damit auch das Flachbandkabel selbst entlang dieser Grundkante gefaltet und erstreckt sich dann in einem Winkel, der an einen auf einer Trägerplatte vorgesehenen Verlegepfad angepasst werden kann.

Aus JP 08 149 662 A ist zwar eine Vorrichtung zur Befestigung von Flachbandkabeln bekannt, welche Mittel zum Befestigen der Vorrichtung auf einer Trägerplatte und Mittel zur Halterung des Flachbandkabels aufweist. Diese Vorrichtung ist jedoch grundlegend von dem Anmeldungsgegenstand verschieden, da sie insbesondere kein Mittelfeld in Form eines gleichseitigen Vierecks und sich davon paarweise erstreckende Fortsätze aufweist und auch nicht entlang einer diagonal durch das Mittelfeld verlaufenden Grundkante faltbar ist.

Aus US 4 406 916 A ist ebenfalls eine Vorrichtung zur Befestigung von Flachbandkabeln bekannt. Diese hat zwar Mittel zur Halterung des Flachbandkabels, aber kann nicht an eine Trägerplatte befestigt werden und ist auch nicht entlang einer diagonal durch das Mittelfeld verlaufenden Grundkante faltbar.

Weiterhin ist aus JP 07 031 043 A eine Schutzvorrichtung für Flachbandkabel bekannt. Diese ist zwar entlang einer diagonal durch das Mittelfeld verlaufenden Grundkante faltbar und verfügt auch über eine Halterung für das Flachbandkabel, sie ist aber nicht kreuzförmig ausgebildet und hat lediglich einen Fortsatz, der sich an das Mittelteil anschließt. Im übrigen verfügt sie auch nicht über Mittel zur Befestigung an einer Trägerplatte.

Schließlich zeigt die JP 07 211 150 A noch eine ähnliche Vorrichtung, welche auch entlang einer diagonal durch das Mittelfeld verlaufenden Grundkante faltbar ist. Diese hat aber keine Fortsätze, keine Mittel zur Halterung des Flachbandkabels weder an den Fortsätzen noch an dem Mittelfeld und kann auch nicht an eine Trägerplatte befestigt werden.

An der Unterseite zweier benachbarter aber nicht miteinander zur Deckung zu bringenden Fortsätzen sind zur Befestigung an einer Trägerplatte vorteilhaft Befestigungsfüße vorgesehen, die in dafür vorgesehene Öffnungen der Trägerplatte einrasten können.

Der Winkel zwischen den mit der Trägerplatte verbindbaren Fortsätzen und zwischen den mit diesen zur Deckung zu bringenden Fortsätzen ist gleich dem Winkel zu wählen, in dem das Flachbandkabel an der Trägerplatte zu verlegen ist; das Mittelfeld weist dabei die Form eines gleichseitigen Vierecks auf. Es können so Vorrichtungen zur Verlegung in beliebigen Winkeln hergestellt werden.

Wenn die Fortsätze zueinander im rechten Winkel stehen und das Mittelfeld eine quadratische Form hat, eignet sich die Vorrichtung speziell zur rechtwinkligen Verlegung des Flachbandkabels.

Zur Halterung eines eingelegten Flachbandkabels ist eine sich über das Mittelfeld erstreckende keilförmige Lasche vorgesehen, deren Keilfläche parallel zur diagonal durch das Mittelfeld verlaufenden Grundkante verläuft, entlang der die Vorrichtung faltbar ist. So dient die Lasche nicht nur der Halterung des Flachbandkabels, ihre Keilfläche unterstützt gleichzeitig das exakte Falten des Flachbandkabels mit einem definierten Biegeradius entlang der Grundkante.

Zur besseren Halterung eines eingelegten Flachbandkabels kann vorteilhafterweise an wenigstens einem der beim Einlegen überdeckten Fortsätze eine sich parallel zur Lasche des Mittelfeldes erstreckende Zunge vorgesehen sein.

Nach einer bevorzugten Ausführungsform der Erfindung weist das Mittelfeld eine Ausnehmung auf, durch die die diagonal durch das Mittelfeld verlaufende Grundkante definiert ist, entlang der die Vorrichtung faltbar ist; die in Fortsetzung der Grundkante verbleibenden Verbindungsstege am Übergang vom Mittelfeld zu den anstoßenden Fortsätzen sind dabei im Vergleich zu dem übrigen Kunststoffteil schwächer ausgebildet. Dadurch wird das Falten entlang der Grundkante erleichtert bzw. ermöglicht.

Die Ausnehmung kann die Form eines gleichschenkligen Dreiecks haben, wobei dessen Grundlinie die Grundkante definiert, entlang der die Vorrichtung faltbar ist.

Beim Falten der Vorrichtung werden die dabei miteinander zur Deckung gebrachten Fortsätze mit an ihren Seitenkanten ausgebildeten Eingriffsmitteln gegenseitig zum Eingriff gebracht.

Dazu können an den Seitenkanten zweier Fortsätze senkrecht abragende, einander zugewandte Haken als Eingriffsmittel vorgesehen sein und die Seitenkanten der mit diesen Fortsätzen zur Deckung zu bringenden Fortsätze sind dann durch zu diesen Seitenkanten parallel verlaufende Schlitze federnd ausgebildet.

Vorteilhaft ist in dem Fortsatz, der mit dem die Zunge aufweisenden Fortsatz zur Deckung zu bringen ist, eine über diese Zunge passende Aussparung vorgesehen.

Die Erfindung wird im folgenden anhand der anhängenden Zeichnung näher beschrieben; es zeigen:
- Fig. 1: die Draufsicht auf eine erfindungsgemäße Befestigungsvorrichtung für die Verlegung eines Flachbandkabels im rechten Winkel in noch offenem Zustand,
- Fig. 2: eine Seitenansicht der Befestigungsvorrichtung gemäß Fig. 1 in Richtung des Pfeiles P in Fig.1,
- Fig. 3: die Draufsicht auf die Befestigungsvorrichtung gemäß Fig. 1 mit eingelegtem Flachbandkabel in noch offenem Zustand und
- Fig. 4: die Draufsicht auf die Befestigungsvorrichtung gemäß Fig. 1 mit eingelegtem Flachbandkabel in geschlossenem Zustand für die Verlegung des Flachbandkabels im rechten Winkel.

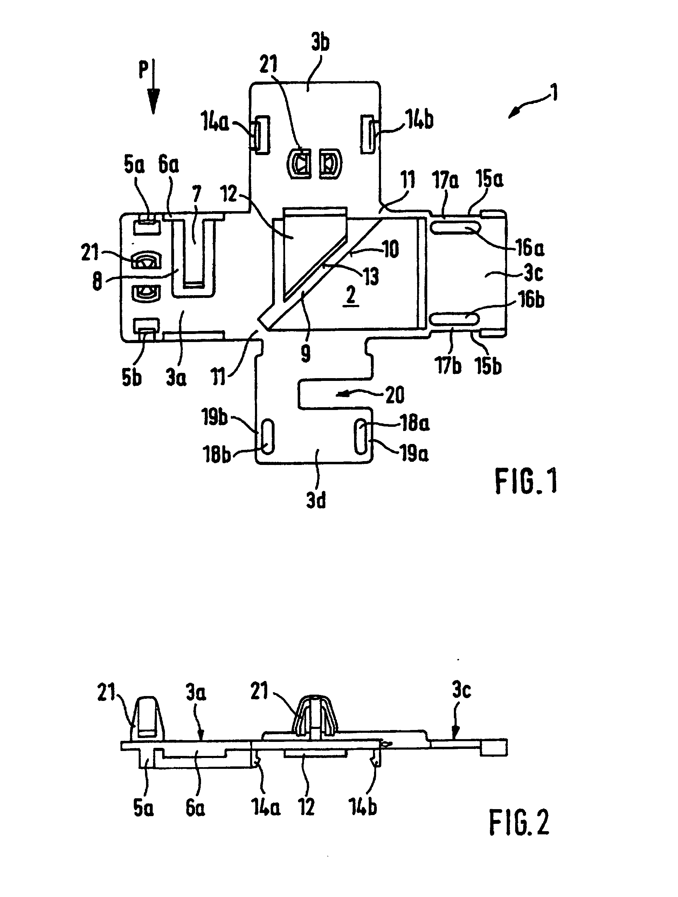

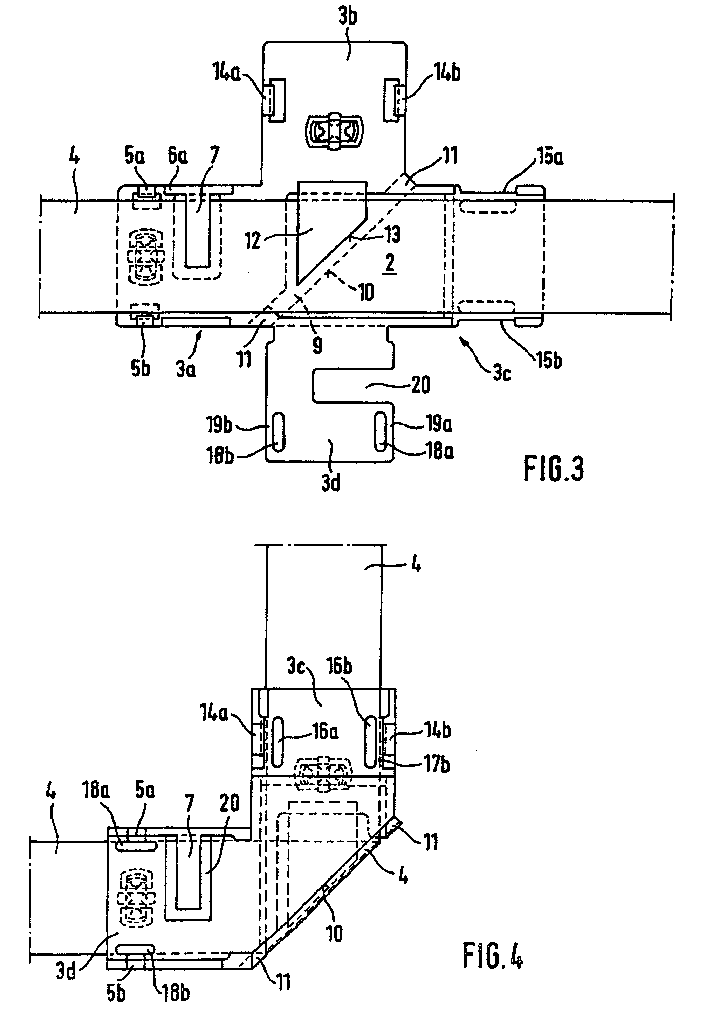

Es ist beispielhaft eine Befestigungsvorrichtung dargestellt, die sich speziell für das Verlegen eines Flachbandkabels im rechten Winkel eignet. Gemäß Fig. 1 besteht sie aus einem flachen, kreuzförmigen Kunststoffteil **1** mit von einem quadratischen Mittelfeld **2** zueinander im rechten Winkel und in gleicher Länge und Breite abragenden, ebenfalls etwa quadratischen Fortsätzen **3a, 3b, 3c, 3d**, die um ein gewisses Maß breiter sind als ein Flachbandkabel **4** (siehe Fig. 3) an der Stelle, die für die Befestigung vorgesehen ist Es sei dazu angemerkt, dass ein Flachbandkabel über seine gesamte Länge unterschiedliche Breiten aufweisen kann, z.B. an Stellen, an denen elektrische Kontakte oder Anschlüsse vorgesehen sind, breiter sein kann als über Längenabschnitte, auf denen die Leiterbahnen lediglich parallel geführt sind.

Vorzugsweise wird zur Befestigung des Flachbandkabels eine Stelle innerhalb eines schmaleren Längenabschnitts gewählt; Bedingung ist dies aber nicht.

Nahe am Ende des ersten Fortsatzes **3a** sind beidseitig und einander gegenüberstehend zwei senkrecht abragende und nach innen, d.h. aufeinander zu gerichtete Haken **5a, 5b** angeformt. Daneben sind von den beiden Seitenkanten ebenfalls senkrecht hochstehende Führungen **6a, 6b** für ein Flachbandkabel **4** (siehe Fig. 3) vorgesehen. Von der einen dieser Führungen **6a** ragt eine Zunge **7** ab, die in geringem Abstand zur Oberfläche des Fortsatzes **3a** über einen Teil seiner Breite reicht; sie kann sich gemäß Fig. 1 über eine rechteckige Ausnehmung **8** im Fortsatz **3a** erstrecken.

Das quadratische Mittelfeld **2** weist in der dargestellten Ausführungsform eine Ausnehmung **9** in Form eines gleichschenkligen Dreiecks auf, dessen Grundkante **10** diagonal, also im Winkel von 45°, über das Mittelfeld **2** verläuft. Für den Zweck der Erfindung würde auch ein entsprechend der Grundkante **10** diagonal über das Mittelfeld **2** verlaufender Schlitz genügen. In der Fortsetzung eines solchen Schlitzes oder eben der diagonal verlaufenden Grundkante **10** der dreieckförmigen Ausnehmung **9** sind die beidseitig verbliebenen Verbindungsstege **11** am Übergang der Fortsätze **3a, 3d** und **3b, 3c** in das Mittelfeld **2** geschwächt ausgebildet, um, wie weiter unten noch ausgeführt wird, die Schließbewegung der Befestigungsvorrichtung zuzulassen oder zu erleichtern.

Parallel zur Zunge **7** ragt von der einen Seitenkante der Ausnehmung **9** eine keilförmige Lasche **12** ab, deren Keilfläche **13** parallel zur Grundkante **10** der Ausnehmung **9** verläuft.

An den Seitenkanten des zweiten Fortsatzes **3b** sind ähnlich wie beim ersten Fortsatz **3a** senkrecht hochstehende, einander zugewandte Haken **14a, 14b** angeformt. Beim Schließen der Befestigungsvorrichtung kommen mit diesen Haken **14a, 14b** die Seitenkanten des dritten Fortsatzes **3c** in Eingriff, wozu diese jeweils eine leichte Einbuchtung **15a, 15b** ausweisen. Außerdem sind parallel zu diesen Einbuchtungen **15a, 15b** Schlitze **16a, 16b** vorgesehen, die seitlich jeweils einen schmalen Steg **17a, 17b** belassen, der federnd an den Haken **14a, 14b** des zweiten Fortsatzes **3b** einschnappen kann.

Die Seitenkanten des vierten Fortsatzes **3d** kommen beim Schließen der Befestigungsvorrichtung mit den Haken **5a, 5b** an den Seitenkanten des ersten Fortsatzes **3a** in gleicher Weise in Eingriff. Dazu sind auch in diesem vierten Fortsatz **3d** parallel zu den Seitenkanten Schlitze **18a, 18b** vorgesehen, so dass der jeweils verbleibende Steg **19a, 19b** federnd an den Haken **5a, 5b** des ersten Fortsatzes **3a** einschnappen kann. In dem vierten Fortsatz **3d** ist außerdem eine der Zunge **7** des ersten Fortsatzes **3a** entsprechende Aussparung **20** vorgesehen, die beim Schließvorgang die Zunge **7** aufnehmen kann.

Wie insbesondere aus Fig. 2 zu ersehen ist, sind an der Unterseite des ersten und des zweiten Fortsatzes **3a** und **3b** Befestigungsfüße **21** angeformt, die mit in einer Trägerplatte (nicht dargestellt), z.B. einem Karosserieteil eines Kraftfahrzeugs, vorgesehenen Öffnungen federnd in Eingriff gebracht werden können.

Um mit dieser Befestigungsvorrichtung ein Flachbandkabel **4** auf einer Trägerplatte im rechten Winkel zu verlegen, wird das Flachbandkabel **4** gemäß Fig. 3 unter die Zunge **7** des ersten Fortsatzes **3a** und unter die keilförmige Lasche **12** des Mittelfeldes **2** geschoben, so dass es sich längs über den ersten Fortsatz **3a,** das Mittelfeld **2** und den dritten Fortsatz **3c** erstreckt. Danach wird die Befestigungsvorrichtung entlang der im Winkel von 45° verlaufenden Grundkante **10** der Ausnehmung **9** des Mittelfeldes **2** und der dafür geschwächt ausgebildeten Verbindungsstege **11** gefaltet, wobei die Seitenkanten des dritten Fortsatzes **3c** mit den seitlich am zweiten Fortsatz **3b** ausgebildeten Haken **14a, 14b** und die Seitenkanten des vierten Fortsatzes **3d** mit den seitlich am ersten Fortsatz **3a** ausgebildeten Haken **5a, 5b** in Eingriff gebracht werden. Damit ist die Befestigungsvorrichtung geschlossen, und das Flachbandkabel **4** ist gemäß Fig. **4** rechtwinklig gelegt. Mit den auf der Unterseite des ersten und des zweiten Fortsatzes **3a, 3b** angeformten Befestigungsfüßen **21** (siehe Fig. 2) kann die Befestigungsvorrichtung nun samt dem darin gehaltenen Flachbandkabel **4** dann in Öffnungen verankert werden, die entlang eines für das Flachbandkabel **4** an einer nicht dargestellten Trägerplatte vorgesehenen, rechtwinklig verlaufenden Verlegepfades vorgesehen sind.

Das Flachbandkabel **4** wird dabei in der Befestigungsvorrichtung entlang der Grundkante **10** der Ausnehmung **9** bzw. der Keilfläche **13** der Lasche **12** im Mittelfeld **2** exakt mit einem definierten Biegeradius von z.B. 1,5 mm gefaltet, und zwar wird dies insbesondere durch das Zusammenwirken der Gundkante **10** und der zu dieser parallel verlaufenden Keilfläche **13** der Lasche **12** erreicht. Eine Beschädigung des Flachbandkabels **4** bei seiner Verlegung oder bei der weiteren Montage von z.B. damit ausgerüsteten Karosserieteilen wird vermieden.

Die oben anhand der Fig. 1 bis 4 beschriebene Befestigungsvorrichtung eignet sich speziell für das exakte Verlegen eines Flachbandkabels im rechten Winkel. Für das Verlegen in einem spitzen oder stumpfen Winkel wären die Fortsätze **3a** bis **3d** entsprechend spitz- und stumpfwinklig zueinander anzuordnen, ausgehend von einem Mittelfeld **2,** das dann die Form eines Rhombus annimmt. Der für die Verlegung gewünschte Winkel hätte nach Fig. 1 zwischen dem ersten **3a** und dem zweiten Fortsatz **3b** bzw. zwischen dem dritten **3c** und dem vierten Fortsatz **3d** zu erscheinen.

Mit der erfindungsgemäßen Befestigungsvorrichtung lassen sich Flachbandkabel in einem definierten, vorher bestimmbaren Winkel verlegen. Sie ist leicht handhabbar; auf Grund der einteiligen Ausbildung können keine Einzelteile fehlen oder verloren gehen. Bei der Montage läßt sich die Befestigungsvorrichtung auf einem Flachbandkabel **4** innerhalb eines Längenabschnitts mit gleichbleibender, der Breite der Fortsätze **3a** bis **3d** entsprechender Breite beliebig verschieben, so dass ihre Stellung auf dem Flachbandkabel **4** problemlos an die Abstände zwischen den Befestigungsöffnungen in einer Trägerplatte angepaßt werden kann bzw. auftretende Toleranzen oder Abweichungen ausgeglichen werden können.

### Bezugszeichenliste:

- 1: (Kunststoff-)Teil
- 2: Mittelfeld
- 3a, 3b, 3c, 3d: Fortsätze
- 4: Flachbandkabel
- 5a, 5b: Haken
- 6a, 6b: Führung
- 7: Zunge
- 8: Öffnung
- 9: Ausnehmung
- 10: Grundkante
- 11: Verbindungsstege
- 12: Lasche
- 13: Keilfläche
- 14a, 14b: Haken
- 15a, 15b: Einbuchtung
- 16a, 16b: Schlitze
- 17a, 17b: Stege
- 18a, 18b: Schlitze
- 19a, 19b: Stege
- 20: Aussparung
- 21: Befestigungsfüße

## Patentansprüche

1. Vorrichtung zur Befestigung eines Flachbandkabels an einer Trägerplatte mit Mitteln zur Halterung des Flachbandkabels, wobei die Vorrichtung als ein einstückiges, flaches Kunststoffteil **(1)** ausgebildet ist, an dem, ausgehend von einem Mittelfeld **(2)** in Form eines gleichseitigen Vierecks und paarweise einander gegenüberliegend, sich vier Fortsätze **(3a, 3b, 3c, 3d)** erstrecken, die geringfügig breiter sind als ein zu befestigendes Flachbandkabel **(4)** an seiner für die Befestigung vorgesehenen Stelle, und wobei die Vorrichtung entlang einer diagonal durch das Mittelfeld verlaufenden Grundkante **(10)** derart faltbar ist, dass jeweils zwei benachbarte Fortsätze (**3b, 3c** und **3a, 3d**) zur Deckung gelangen, worauf sie in dieser Stellung arretierbar sind, **dadurch gekennzeichnet, dass** die Vorrichtung als ein kreuzförmiges Kunststoffteil **(1)** ausgebildet ist, dass sie Mittel zu ihrer Befestigung an einer Trägerplatte aufweist, und dass am Mittelfeld **(2)** und/oder wenigstens an einem der Fortsätze **(3a)** Mittel **(8, 12)** zur Halterung eines sich über diesen Fortsatz **(3a)**, das Mittelfeld **(2)** und den gegenüberliegenden Fortsatz **(3c)** erstreckend eingelegten Flachbandkabels **(4)** vorgesehen sind.

2. Vorrichtung nach Anspruch 1, **dadurch gekennzeichnet, dass** an der Unterseite zweier benachbarter aber nicht miteinander zur Deckung zu bringenden Fortsätzen **(3a, 3b)** Befestigungsfüße **(21)** vorgesehen sind, die in dafür vorgesehene Öffnungen einer Trägerplatte einrastbar sind.

3. Vorrichtung nach Anspruch 2, **dadurch gekennzeichnet, dass** der Winkel zwischen den mit der Trägerplatte verbindbaren Fortsätze **(3a, 3b)** und zwischen den mit diesen zur Deckung zu bringenden Fortsätzen **(3c, 3d)** gleich dem Winkel ist, in dem das Flachbandkabel **(4)** an der Trägerplatte zu verlegen ist und das Mittelfeld **(2)** die Form eines gleichseitigen Vierecks aufweist.

4. Vorrichtung nach Anspruch 3, **dadurch gekennzeichnet, dass** die Fortsätze **(3a, 3b, 3c, 3d)** zueinander im rechten Winkel stehen und das Mittelfeld **(2)** eine quadratische Form hat.

5. Vorrichtung nach Anspruch 1, **dadurch gekennzeichnet, dass** sich zur Halterung eines eingelegten Flachbandkabels **(4)** über das Mittelfeld **(2)** eine keilförmige Lasche **(12)** erstreckt, deren Keilfläche **(13)** parallel zur diagonal durch das Mittelfeld verlaufenden Grundkante **(10)** verläuft, entlang der die Vorrichtung faltbar ist.

6. Vorrichtung nach Anspruch 5, **dadurch gekennzeichnet, dass** zur Halterung eines eingelegten Flachbandkabels **(4)** an wenigstens einem der dabei überdeckten Fortsätze **(3a, 3c)** eine sich parallel zur Lasche **(12)** des Mittelfeldes **(2)** erstreckende Zunge **(7)** vorgesehen ist.

7. Vorrichtung nach Anspruch 5 oder 6, **dadurch gekennzeichnet, dass** das Mittelfeld **(2)** eine Ausnehmung **(9)** aufweist, durch die die diagonal durch das Mittelfeld **(2)** verlaufende Grundkante **(10)** definiert ist, entlang der die Vorrichtung faltbar ist, und dass in Fortsetzung der Grundkante **(10)** die verbleibenden Verbindungsstege **(11)** am Übergang vom Mittelfeld **(2)** zu den anstoßenden Fortsätzen **(3a, 3d** und **3b, 3c)** im Vergleich zu dem übrigen Kunststoffteil **(1)** schwächer ausgebildet sind.

8. Vorrichtung nach Anspruch 7, **dadurch gekennzeichnet, dass** die Ausnehmung **(9)** ein gleichschenkliges Dreieck ist, durch dessen Grundlinie die Grundkante **(10)** definiert ist, entlang der die Vorrichtung faltbar ist

9. Vorrichtung nach Anspruch 1, **dadurch gekennzeichnet, dass** die beim Falten der Vorrichtung miteinander zur Deckung gebrachten Fortsätze (**3a, 3d** und **3b, 3c**) mit an ihren Seitenkanten ausgebildeten Eingriffsmitteln gegenseitig zum Eingriff bringbar sind.

10. Vorrichtung nach Anspruch 9, **dadurch gekennzeichnet, dass** an den Seitenkanten zweier Fortsätze **(3a, 3b)** senkrecht abragende, einander zugewandte Haken **(5a, 5b; 14a, 14b)** als Eingriffsmittel vorgesehen sind und die Seitenkanten der mit diesen Fortsätzen **(3a, 3b)** zur Deckung zu bringenden Fortsätzen **(3c, 3d)** durch zu diesen Seitenkanten parallel verlaufende Schlitze **(16a, 16b; 18a, 18b)** federnd ausgebildet sind.

11. Vorrichtung nach Anspruch 6, **dadurch gekennzeichnet, dass** in dem Fortsatz **(3d)**, der mit dem die Zunge **(7)** aufweisenden Fortsatz **(3a)** zur Deckung zu bringen ist, eine über diese Zunge **(7)** passende Aussparung **(20)** vorgesehen ist.

## Claims

1. A device for fixing a flat ribbon cable to a carrier plate comprising means for holding the flat ribbon cable, wherein the device is in the form of a one-piece flat plastic member (1) on which, starting from a central portion (2) in the form of an equal-sided quadrilateral and in mutually opposite relationship in pairs there extend four projections (3a, 3b, 3c, 3d) which are slightly wider than a flat ribbon cable (4) to be fixed, at its location intended for fixing, and wherein the device is foldable along a base edge (10) extending diagonally through the central portion, in such a way that each two adjacent projections (3b, 3c and 3a, 3d) come into coincident relationship whereupon they can be arrested in that position, **characterised in that** the device is in the form of a cruciform plastic member (1), that it has means for fixing it to a carrier plate, and that provided at the central portion (2) and/or at least at one of the projections (3a) are means (8, 12) for holding a flat ribbon cable (4) which is inserted in such a way as to extend over said projection (3a), the central portion (2) and the opposite projection (3c).

2. A device according to claim 1 **characterised in that** provided at the underside of two projections (3a, 3b) which are adjacent but which are not to be brought into coincident relationship with each other are fixing feet (21) which can be latched in openings provided for that purpose in a carrier plate.

3. A device according to claim 2 **characterised in that** the angle between the projections (3a, 3b) which can be connected to the carrier plate and between the projections (3c, 3d) which can be brought into a coincident relationship with them is equal to the angle at which the flat ribbon cable (4) is to be laid on the carrier plate and the central portion (2) is in the shape of an equal-sided quadrilateral.

4. A device according to claim 3 **characterised in that** the projections (3a, 3b, 3c, 3d) extend at a right angle to each other and the central portion (2) is of a square shape.

5. A device according to claim 1 **characterised in that** to hold an inserted flat ribbon cable (4) extending over the central portion (2) is a wedge-shaped bar (12) whose wedge surface (13) extends parallel to the base edge (10) which extends diagonally through the central portion and along which the device is foldable.

6. A device according to claim 5 **characterised in that** to hold an inserted flat ribbon cable (4) provided at at least one of the projections (3a, 3b) which is covered over **in that** situation is a tongue (7) extending parallel to the bar (12) of the central portion (2).

7. A device according to claim 5 or claim 6 **characterised in that** the central portion (2) has an opening (9) which defines the base edge (10) which extends diagonally through the central portion (2) and along which the device is foldable and that as a continuation of the base edge (10) the remaining connecting limbs (11) at the transition from the central portion (2) to the adjoining projections (3a, 3d and 3b, 3c) are weaker in comparison with the rest of the plastic member (1).

8. A device according to claim 7 **characterised in that** the opening (9) is an isosceles triangle, the base line of which defines the base edge (10) along which the device is foldable.

9. A device according to claim 1 **characterised in that** the projections (3a, 3d and 3b, 3c) which are brought into coincident relationship with each other when the device is folded can be brought into mutual engagement with engagement means provided at their side edges.

10. A device according to claim 9 **characterised in that** the engagement means are mutually facing hooks (5a, 5b; 14a, 14b) which project perpendicularly at the side edges of two projections (3a, 3b) and the side edges of the projections (3c, 3d) which are to be brought into coincident relationship with said projections (3a, 3b) are of a resilient nature by virtue of slots (16a, 16b; 18a, 18b) extending parallel to said side edges.

11. A device according to claim 6 **characterised in that** provided in the projection (3d) which is to be brought into coincident relationship with the projection (3a) having the tongue (7) is a recess (20) which fits over said tongue (7).

## Revendications

1. Dispositif pour la fixation d'un câble plat sur une plaque support avec des moyens pour assurer la retenue du câble plat, le dispositif se présentant en l'occurrence sous la forme d'un élément en matière plastique monobloc plat (1) d'où s'étendent, partant d'une portion centrale (2) ayant la forme d'un carré dont tous les côtés sont égaux et sont respectivement opposés par paire, quatre prolongements (3a, 3b, 3c, 3d) qui sont très légèrement plus larges qu'un câble plat (4) à fixer à l'endroit prévu pour sa fixation et ce dispositif pouvant en l'occurrence être replié, suivant une arête de base (10) s'étendant selon une orientation en diagonale au travers de la portion centrale, de telle façon que deux prolongements voisins (3b, 3c et 3a, 3d) peuvent être respectivement amenés en coïncidence de recouvrement et peuvent ensuite être bloqués dans cette position, **caractérisé en ce que** ce dispositif se présente sous la forme d'une pièce en matière plastique cruciforme (1 ), qu'elle comporte des moyens permettant de la fixer sur une plaque support et qu'il est prévu, au niveau de la portion centrale (2) et, ou encore, au moins au niveau d'un des prolongements (3a) des moyens (8, 12) pour maintenir en position un câble plat (4) disposé de manière à s'étendre au-dessus de ce prolongement (3a), de la portion centrale (2) et du prolongement opposé (3c).

2. Dispositif selon la revendication 1, **caractérisé en ce qu'**il est prévu, au niveau de la face inférieure de deux prolongements (3a, 3b) voisins, mais non susceptibles d'être amenés en coïncidence de recouvrement, des pattes de fixation (21), qui sont destinées à être insérées en prise d'encastrement dans des ouvertures ménagées à cet effet dans une plaque support.

3. Dispositif selon la revendication 2, **caractérisé en ce que** l'angle entre les prolongements (3a, 3b) destinés à être raccordés à la plaque support et entre les prolongements (3c, 3d) destinés à être amenés en coïncidence de recouvrement avec ceux-ci est égal à l'angle suivant lequel le câble plat (4) doit être posé sur la plaque support et que la portion centrale (2) a la forme d'un carré dont tous les côtés sont égaux.

4. Dispositif selon la revendication 3, **caractérisé en ce que** les prolongements 3a, 3b, 3c, 3d sont respectivement disposés en angle droit l'un par rapport à l'autre et que la portion centrale (2) affecte la forme d'un carré.

5. Dispositif selon la revendication 1, **caractérisé en ce qu'**il est prévu, pour assurer le maintien en position du câble plat (4) au-dessus de la portion centrale (2) une éclisse en forme de coin (12), dont la face cunéiforme (13) s'étend parallèlement à l'arête de base (10) s'étendant selon une orientation en diagonale au travers de la portion centrale, le long de laquelle le dispositif est destiné à être replié.

6. Dispositif selon la revendication 5, **caractérisé en ce qu'**il est prévu, pour assurer la fixation en position d'un câble plat (4) posé, sur au moins un des prolongements (3a, 3c) en l'occurrence recouverts, une languette (7) s'étendant parallèlement à l'éclisse (12) de la portion centrale (2).

7. Dispositif selon la revendication 5 ou 6, **caractérisé en ce que** la portion centrale (2) présente un évidement (9) au moyen duquel l'arête de base (10) s'étendant en diagonale au travers de la portion centrale (2) est définie, en suivant laquelle le dispositif est destiné à être replié sur lui-même et **en ce que** les barrettes entretoises de liaison (11) subsistant au niveau de la transition entre la portion centrale (2) et les prolongements (3a, 3d et 3b, 3c) attenants ont une section plus réduite comparativement au reste de la pièce en matière plastique (1).

8. Dispositif selon la revendication 7, **caractérisé en ce que** l'évidement (9) a la forme d'un triangle isocèle, dont la base définit l'arête de base (10), en suivant laquelle le dispositif est destiné à être replié sur lui-même.

9. Dispositif selon la revendication 1, **caractérisé en ce que** les prolongements (3a, 3d et 3b, 3c) respectivement amenés en coïncidence de recouvrement lors du pliage du dispositif, sont destinés à venir respectivement en prise d'encastrement réciproque par l'intermédiaire des moyens d'accrochage dont ils sont munis au niveau de leurs bords latéraux.

10. Dispositif selon la revendication 9, **caractérisé en ce qu'**il est prévu, sur les bords latéraux de deux prolongements (3a, 3b), en tant que moyens d'accrochage, des crochets (5a, 5b ; 14a, 14b) se faisant respectivement face, faisant saillie dans le plan vertical et que les bords latéraux des prolongements (3c, 3d), destinés à être amenés en coïncidence de recouvrement avec ces prolongements (3a, 3b), sont réalisés sous la forme de fentes (16a, 16b ; 18a, 18b) s'étendant parallèlement à ces bords latéraux, capables de réagir élastiquement.

11. Dispositif selon la revendication 6, **caractérisé en ce qu'**il est prévu dans le prolongement (3d), qui est destiné à être amené en coïncidence de recouvrement avec le prolongement (3a) comportant la languette (7), un évidement (20) agencé pour s'adapter au-dessus de cette languette (7).
